# EUROPÄISCHE PATENTSCHRIFT

(11) **EP 1 301 979 B1**
(45) Veröffentlichungstag und Bekanntmachung des Hinweises auf die Patenterteilung: **26.05.2010**
(21) Anmeldenummer: 01953143.3
(22) Anmeldetag: 12.07.2001
(51) Int. Cl.: H02K 7/09, H02K 21/02

(54) **AUFWANDSARMER VERSCHLEISSFREIER ELEKTRISCHER ANTRIEB**
ECONOMICAL, NON-WEARING ELECTRICAL DRIVE DEVICE
ENTRAINEMENT ELECTRIQUE INUSABLE ET ECONOMIQUE

(30) Priorität: 16.07.2000 DE 10034662
(43) Veröffentlichungstag der Anmeldung: 16.04.2003
(73) Patentinhaber: Levitronix LLC, Waltham, MA 02451 (US)
(72) Erfinder: AMRHEIN, Wolfgang, 4100 Ottensheim (AT); SILBER, Siegfried, 4202 Kirchschlag (AT)
(74) Vertreter: Sulzer Management AG
(86) Internationale Anmeldenummer: PCT/DE2001/002530
(87) Internationale Veröffentlichungsnummer: WO 2002/007289

(56) Entgegenhaltungen:
- WO-A-98/42063
- DE-A- 19 726 352
- US-A- 4 851 731
- PATENT ABSTRACTS OF JAPAN vol. 2000, no. 03, 30. März 2000 (2000-03-30) & JP 11 346457 A (MATSUSHITA ELECTRIC IND CO LTD), 14. Dezember 1999 (1999-12-14)

## Beschreibung

Die Magnetlagertechnik erschließt Applikationsfelder des Maschinen- und Gerätebaus mit äußerst hohen Anforderungen an den Drehzahlbereich, die Lebensdauer, die Reinheit und die Dichtheit des Antriebsystems - also im wesentlichen Anwendungsgebiete, die unter Verwendung konventioneller Lagertechniken nicht oder nur schwer realisierbar sind. Verschiedene Ausführungen, wie beispielsweise Hochgeschwindigkeitsfräs- und Schleifspindeln, Turbokompressoren, Vakuumpumpen, oder Pumpen für hochreine chemische oder medizinische Erzeugnisse werden bereits mit Magnetlagern ausgerüstet.

Die in den folgenden Figuren dargestellten Maschinenquerschnitte sind beispielhaft und zum Teil stark vereinfacht und dienen ausschließlich der genaueren Erläuterung des Funktionsprinzips.

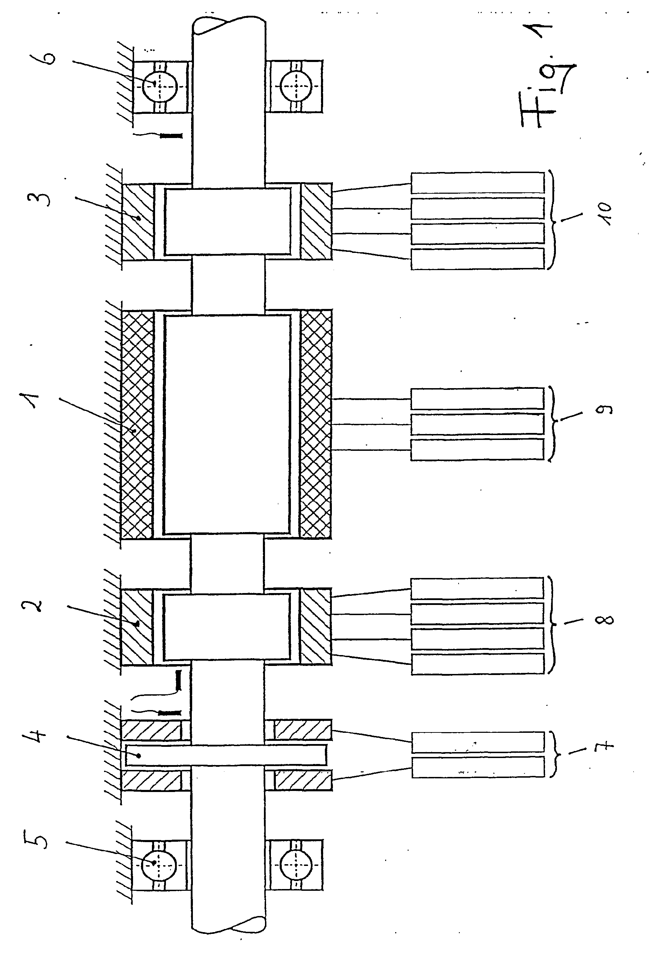

Eine konventionelle magnetgelagerte Maschine (Fig. 1) benötigt neben einer Maschineneinheit (1) zwei Radialmagnetlager (2), (3), ein Axialmagnetlager (4), zwei mechanische Auffanglager (5), (6) sowie für die Ansteuerung der Motor- und Magnetlagerstränge insgesamt zehn Leistungssteller (7), (8), (9), (10).

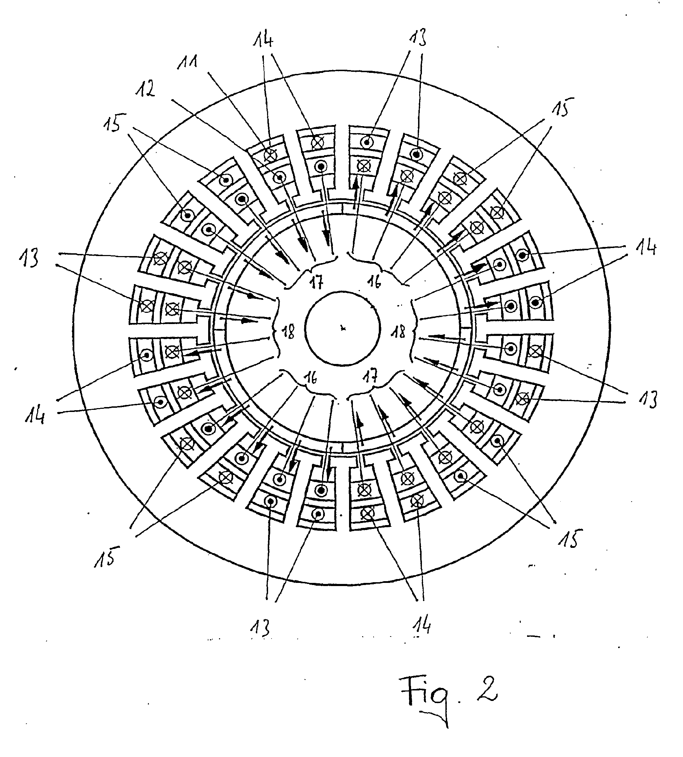

In der Literatur, wie z.B. der DE-A-197 26 352, gibt es Vorschläge (Fig. 2), Maschinen und Radialmagnetlager in einer magnetischen Statoreinheit zu integrieren. In einem Stator sind zwei getrennte Wicklungssysteme (11), (12) für Drehmoment- und Tragkraftwicklung mehrlagig in Nuten eingebracht. Grundsätzlich gilt in lagerlosen Motoren für eine weitgehend entkoppelte Tragkraft- und Drehmomentbildung zwischen den Wicklungspolzahlen der Zusammenhang p₁=p₂±2, wobei p₁ oder p₂ auch die Polzahl des Rotors darstellt. Beide Wicklungssysteme des Motors in Fig. 2 sind dreisträngig. Die Spulen sind gesehnt und über mehrere Nuten verteilt, wodurch eine annähernd sinusförmige Flußverkettung erreicht wird.

Die beiden Wicklungen setzen sich folgendermaßen zusammen:
4-polige Maschinenwicklung (11) (außen): Strang 1 (13), Strang 2 (14), Strang 3 (15) 2-polige Tragwicklung (12) (innen): Strang 1 (16), Strang 2 (17), Strang 3 (18).

Zur Erzielung eines kostenmäßig günstigen Gesamtsystems besteht die Möglichkeit, die Anzahl der Wicklungssysteme zu reduzieren und damit neben dem mechanischen Aufbau auch die Ansteuerelektronik zu vereinfachen.

Als ausgeführtes Beispiel eines Motors mit einer reduzierten Wicklungsanzahl soll ein Motor mit gemeinsamen Drehmoment- und Tragkraftwicklungssystemen bestehend aus vier konzentrierten Spulen, erläutert werden, welcher in der Folge als lagerloser Einphasenmotor bezeichnet wird.

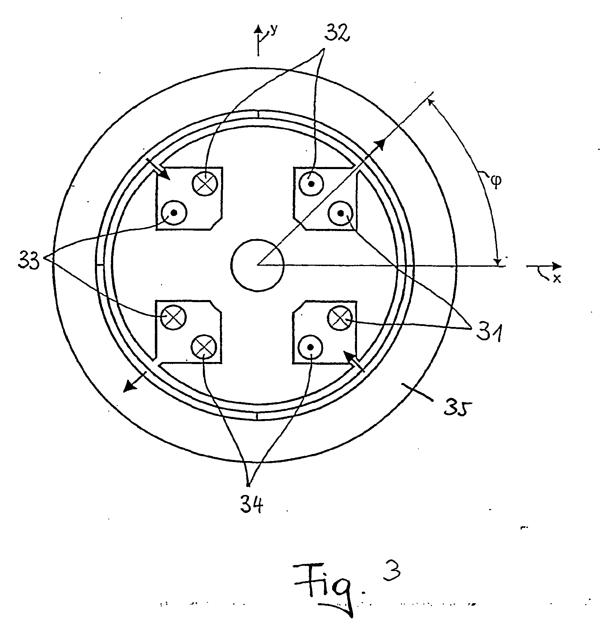

In Fig. 3 ist der Rotor und Stator eines vierpoligen Motors in Außenläuferausführung gezeigt. Der Rotor (35) ist dabei vorzugsweise als Ring oder als Glocke ausgeführt. Mit Hilfe der vier konzentrierten Spulen (31, 32, 33, 34) ist die Erzeugung einer zwei- und vierpoligen Durchflutungsverteilung möglich, sodaß unabhängig voneinander eine Tragkraft in x- und y-Richtung und ein Drehmoment erzeugt werden können. Die Bestimmung der einzelnen Strangströme erfolgt unter Beachtung der Sollgrößenvorgabe für Rotorlage und Drehzahl, Rotorwinkel oder Drehmoment nach Auswertung der Sensorsignale für Rotorlage (x, y) und Rotordrehwinkel (ϕ).

Im vorangegangenen Abschnitt zum Stand der Technik wurden der lagerlose Einphasenmotor und die mehrphasigen Drehfeldmotoren beschrieben.

Beide Ausführungsformen weisen zum Teil erhebliche technische bzw. wirtschaftliche Nachteile auf.

Der lagerlose Einphasenmotor (Fig. 3) ist nur für Applikationen mit geringen Anforderungen an das Anlaufmoment geeignet. Hierzu zählen zum Beispiel Antriebe für Pumpen, Lüfter, Gebläse oder Ventilatoren. In der einfachsten Bauform benötigt der lagerlose Einphasenmotor lediglich vier Einzelspulen. Die Anlaufschwäche des Einphasenantriebs ist konstruktionsbedingt. Während für den Aufbau der radialen Tragkräfte Drehfeldwicklungen zum Einsatz kommen, verfügt der Motorteil nur über eine einphasige Wechselfeldwicklung. Es gibt daher kritische Rotorwinkelstellungen, bei denen das Anlaufmoment unabhängig von der gewählten Stromamplitude null ist. Es muß deshalb konstruktiv dafür gesorgt werden, daß der Rotor nur in Stellungen zur Ruhelage kommt, die von den kritischen Winkellagen abweichen. Das Schwungmoment des Antriebes ermöglicht somit insbesondere in der Anlaufphase aber auch im stationären Betrieb das Überwinden der kritischen Punkte. Für viele andere Antriebsaufgaben ist das Anlaufmoment dieser Motorbauart zu gering.

Der dem Stand der Technik entsprechende lagerlose Mehrphasenmotor (Fig. 2) weist den Nachteil von drehmomentarmen Winkelstellungen nicht auf. Er verfügt im Gegensatz zur einphasigen Variante nicht nur im Lagerteil sondern auch im Motorteil über eine eigene Drehfeldwicklung. Nachteilig sind jedoch hier die mit den beiden Drehfeldwicklungen verbundene hohe Spulenzahlen. Typische Spulenzahlen solcher lagerloser Motoren bewegen sich in der Regel zwischen 36 (verteilte Dreiphasen-Wicklungen) und 12 (einfache Zweiphasen-Wicklungen).

Aus den vorangegangenen Betrachtungen wünschenswert und für den Antriebsmarkt technisch und wirtschaftlich äußerst interessant wären lagerlose Motoren mit kleinen Spulenzahlen und ohne die sich aus der Einphasentechnik ergebenden Einschränkungen des Applikationsbereiches.

Die erfindungsgemäße Lösung dieser Aufgabe geht aus dem unabhängigen Patentanspruch hervor. Bevorzugte Ausführungsvarianten sind durch die abhängigen Ansprüche definiert.

Von besonderem Vorteil bei der erfindungsgemäßen Lösung des Problems ist der wesentlich vereinfachte Aufbau der magnetisch gelagerten Maschine sowie die vereinfachte elektrische Ansteuerung gegenüber bisher bekannten Lösungen.

Die in den Patentansprüchen dargelegte Erfindung erfüllt die oben angeführten Anforderung in hohem Maße. Ein weiterer entscheidender Vorteil liegt aufgrund des unsymmetrischen Wicklungsaufbaus in der starken Sehnung der Wicklung der damit verbundenen hohen Bedämpfung von Harmonischen im Feld- und Durchflutungsaufbau. Diese Eigenschaft vergrößert den Stabilitätsbereich des Positions- und Drehzahlreglers, die Einstellgenauigkeit sowie die Laufruhe des magnetgelagerten Antriebsystems.

Ausführungsbeispiele der Erfindung sind nachstehend anhand der Zeichnungen erläutert. Es zeigen in schematischer Darstellung:
- Fig. 1:: ein konventionelles Magnetgelagertes System;
- Fig. 2:: einen lagerlosen Mehrphasenmotor zum Stand der Technik;
- Fig. 3:: einen lagerlosen Einphasenmotor zum Stand der Technik;
- Fig. 4:: einen lagerlosen Mehrphasenmotor mit unsymmetrischem Statorschnitt und konzentrierten Wicklungen;
- Fig. 5:: Winkelabhängiger Verlauf der Strangströme für eine konstante Tragkraft in x- Richtung;
- Fig. 6:: Unsymmetrische Durchflutung über den Statorumfang;
- Fig. 7:: Winkelabhängiger Verlauf der Strangströme für ein konstantes Moment;
- Fig.8:: Unsymmetrischer Feldverlauf am Luftspaltumfang bei ausgeblendetem Permanentmagnetfeld;
- Fig.9:: Flußdichteverlauf der Tragkraftwicklung (vierpolig) eines Motors mit symmetrischem Blechschnitt (Rotor: zweipolig);
- Fig. 10:: Flußdichteverlauf der Momentenwicklung (zweipolig) eines Motors mit symmetrischem Blechschnitt (Rotor: zweipolig);
- Fig. 11:: Lagerloser Motor mit verteilten Wicklungen (Einzelspulen);
- Fig. 12:: Lagerloser Motor mit verteilten Wicklungen (Spulengruppen);
- Fig. 13:: Lagerloser Motor mit getrennt ausgeführten Wicklungssätzen für Tragkraft- und Momenterzeugung;
- Fig. 14:: Lagerloser Motor Wicklungen um das Statorjoch.

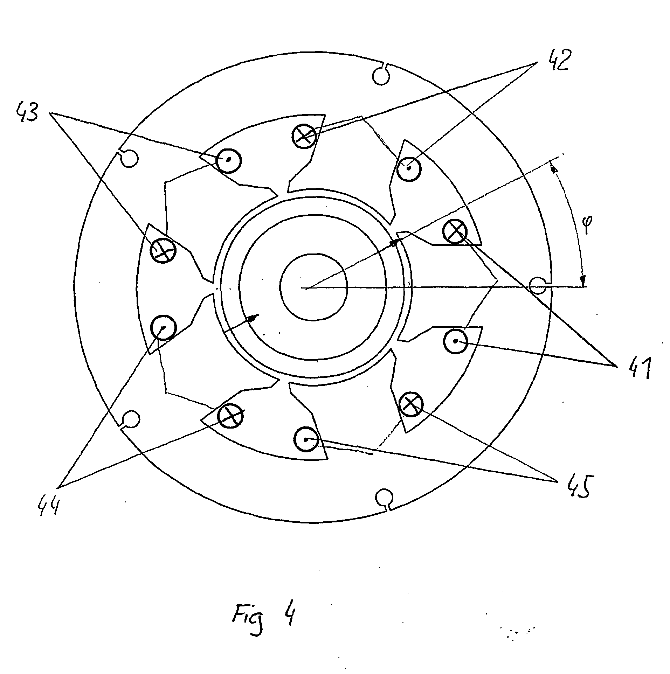

Beispielhaft soll eine mögliche Ausführung der Erfindung im Folgenden beschrieben werden. Fig. 4 zeigt einen Motor mit fünf konzentrierten Einzelspulen (41, 42, 43, 44, 45). Mit dieser Statoranordnung lassen sich durch entsprechende Bestromung der Spulen mit überlagerten Stromkomponenten gleichzeitig sowohl ein zweipoliges als auch ein vierpoliges Drehfeld bzw. eine zwei- und vierpolige Durchflutung erzielen. Auf einen zweipoligen Rotor können daher im Zusammenwirken mit der zweipoligen Wicklungsdurchflutung ein Drehmoment und im Zusammenwirken mit der vierpoligen Wicklungsdurchflutung radiale Tragkräfte erzielt werden.

Die ungeradzahlige Spulen- bzw. Schenkelanzahl fünf, die nicht ganzzahlig durch die beiden verwendeten Polzahlen vier und zwei teilbar ist, führt zu einem unsymmetrischen Blechschnitt und zu unsymmetrischen Durchflutungs- bzw. Feldverteilungen am Umfang des Stators bzw. des Luftspaltes.

Es sind daher abhängig von der Winkelstellung des Rotors, der Tragkraftanforderung und des Drehmomentbedarfes die Spulenströme so zu bestimmen, daß der gewünschte Betriebspunkt erreicht wird.

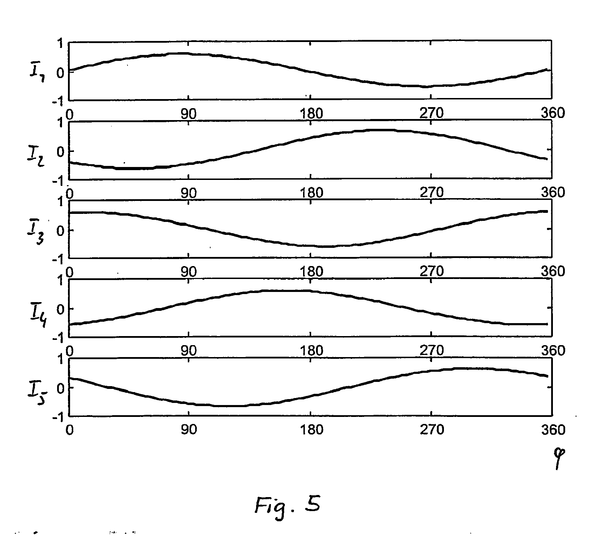

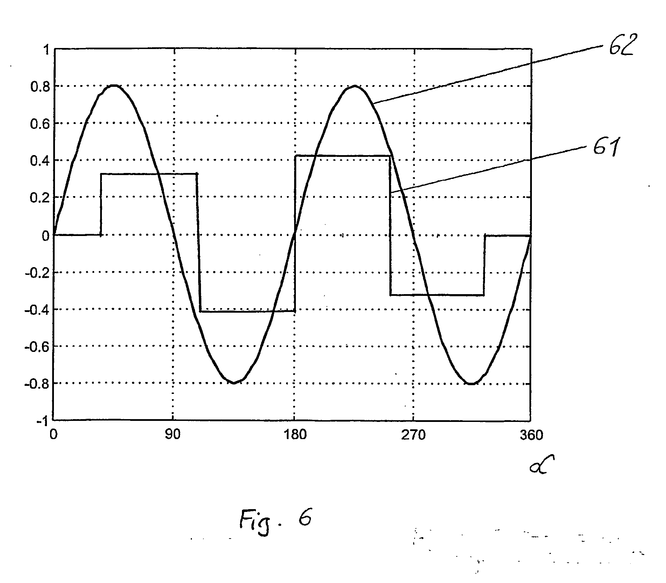

Fig. 5 zeigt hierzu für eine konstante Tragkraft in x-Richtung abhängig vom Rotorwinkel ϕ eines zweipoligen Permanentmagnetrotors mit sinusförmiger Flußdichteverteilung die zugehörigen Tragkraft-Sputenstromkomponenten, wobei I₁ den Strom durch die Spule 41, I₂ den Strom durch die Spule 42, I₃ den Strom durch die Spule 43, I₄ den Strom durch die Spule 44 und I₅ den Strom durch die Spule 45 bezeichnen. In Fig. 6 ist für die Anfangswinkelstellung (ϕ = 0) schematisch der Flußdichteverlauf des Wicklungsfeldes im Luftspalt (61) (bei ausgeblendetem Permanentmagnetfeld des Rotors) gegenüber einem idealen, sinusförmigen vierpoligen Flußdichteverlauf (62) dargestellt. Aus dem Flußdichtediagramm ist der Verlauf eines vierpoligen unsymmetrischen Feldes zu erkennen. Die Unsymmetrie entsteht infolge des nicht ganzzahligen Verhältnisses der Schenkelzahl fünf zur über die Strangströme realisierten Wicklungspolzahl vier.

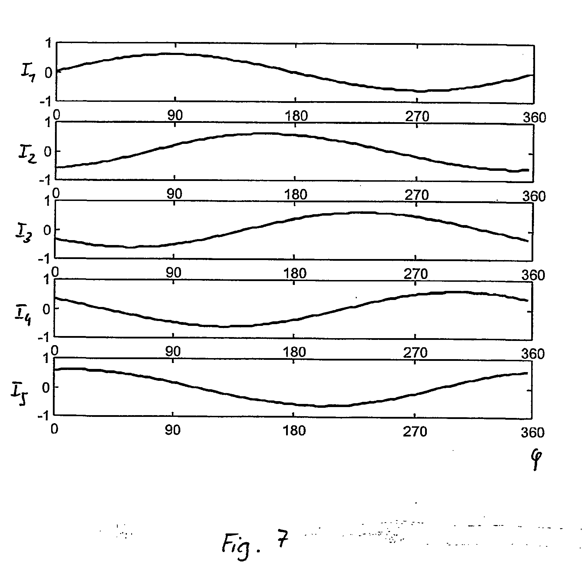

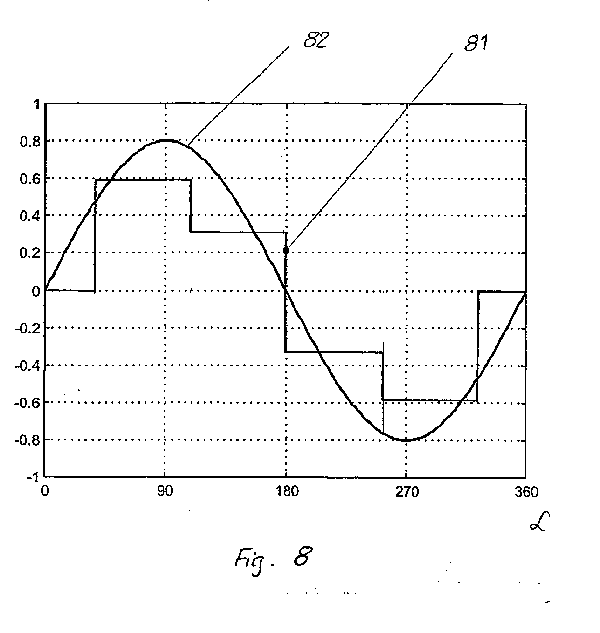

Fig. 7 zeigt passend hierzu für ein konstantes Drehmoment ebenfalls abhängig vom Rotorwinkel ϕ die zugehörigen Drehmoment-Spulenstromkomponenten, wobei auch hier wiederum I₁ den Strom durch die Spule 41, I₂ den Strom durch die Spule 42, I₃ den Strom durch die Spule 43, I₄ den Strom durch die Spule 44 und I₅ den Strom durch die Spule 45 bezeichnen. Die in den beiden Figuren 5 und 7 dargestellten Stromkomponenten werden in den fünf Motorspulen überlagert, so daß sowohl das gewünschte Drehmoment als auch die gewünschte Tragkraft erzielt werden. Über den Statorumfang entsteht aus der elektrischen Überlagerung der Ströme und die geometrische Verteilung der Spulen die Gesamtdurchflutung des Motors. Die In Fig. 8 ist wiederum für die Anfangsrotorwinkelstellung (ϕ = 0) der Flußdichteverlauf des Wicklungsfeldes im Luftspalt (81) (ebenfalls bei ausgeblendetem Permanentmagnetfeld des Rotors) gegenüber einem idealen, sinusförmigen zweipoligen Flußdichteverlauf (82) schematisch dargestellt. Aus dem Flußdichtediagramm ist der Verlauf eines zweipoligen unsymmetrischen Feldes zu erkennen. Die Unsymmetrie entsteht infolge des nicht ganzzahligen Verhältnisses der Schenkelzahl fünf zur über die Strangströme realisierten Wicklungspolzahl zwei.

In gleicher Weise lassen sich auch lagerlose Drehfeldmotoren mit beispielsweise sechs oder sieben konzentrierten Einzelspulen ausführen. Eine Dreispulenlösung führt zu einem im mechanischen Aufwand reduzierten lagerlosen Einphasenmotor.

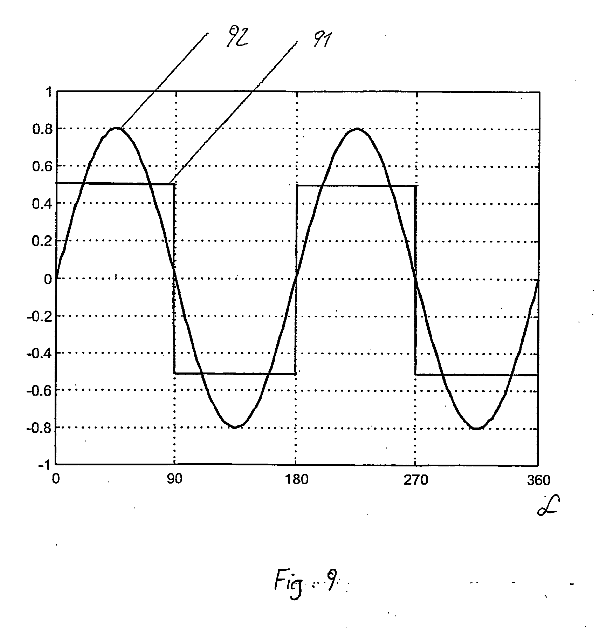

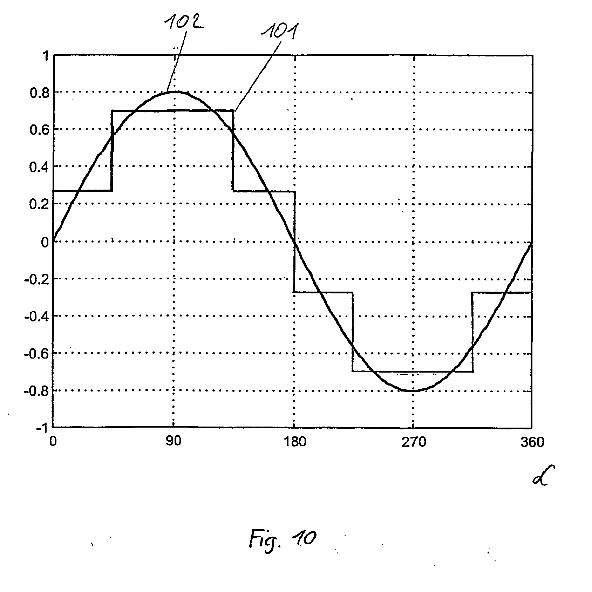

Um den Unterschied im Flußdichteverlauf zu einem symmetrisch aufgebauten Motor aufzuzeigen, ist in Fig. 9 ein vierpoliger Durchflutungs- und Flußdichteverlauf (91) der durch einen Motor mit acht konzentrierten Einzelspulen entsteht, gegenüber einem idealen, sinusförmigen vierpoligen Durchflutungs- und Flußdichteverlauf (92), dargestellt. Für diese Motorkonfiguration ist zugehörig in Fig. 10 ein zweipoliger Durchflutungs- und Flußdichteverlauf (101), wiederum gegenüber dem sinusförmigen Durchflutungs- und Flußdichteverlauf (102) dargestellt.

Anstelle von konzentrierten Einzelwicklungen können auch verteilte und ggfs. gesehnte Wicklungen in den Stator eingebracht werden. Auch hier wird aus den oben benannten Gründen die Zahn- bzw. Nutzahl des Stators so gewählt, daß diese kein ganzzahliges Vielfaches der beiden zu realisierenden Wicklungspolzahlen beträgt.

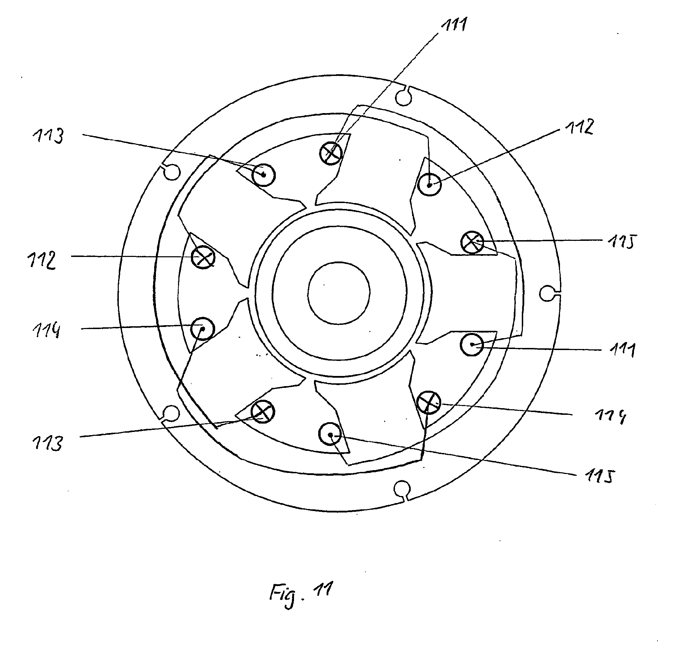

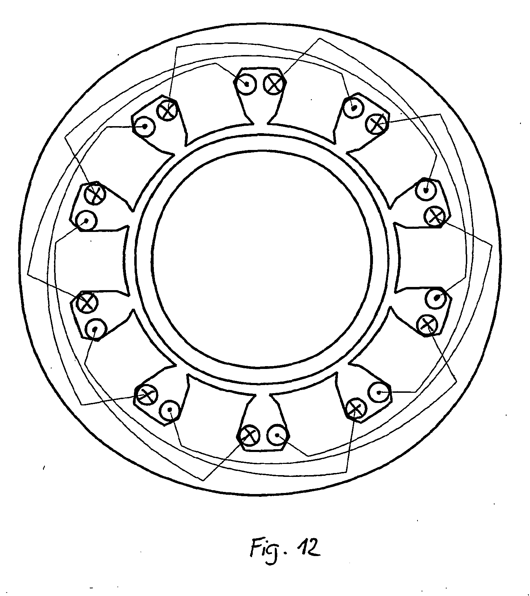

Ein Beispiel zur Erläuterung des prinzipiellen Aufbaus ist in Fig. 11 dargestellt. Wir sehen hier fünf in Nuten gelegte Spulen (111, 112, 113, 114 und 115) mit größerer Spulenweite als in Fig. 4. Die Spulen umschließen jeweils zwei Zähne und werden daher nicht mehr als konzentrierte Spulen bezeichnet. Eine weitere Variante zeigt Fig. 12 mit einer zusätzlichen Spulenverteilung, wobei zwei in benachbarten Nuten angeordnete Spulen eine elektrisch seriell oder parallel zusammengeschaltete Spulengruppe bildet.

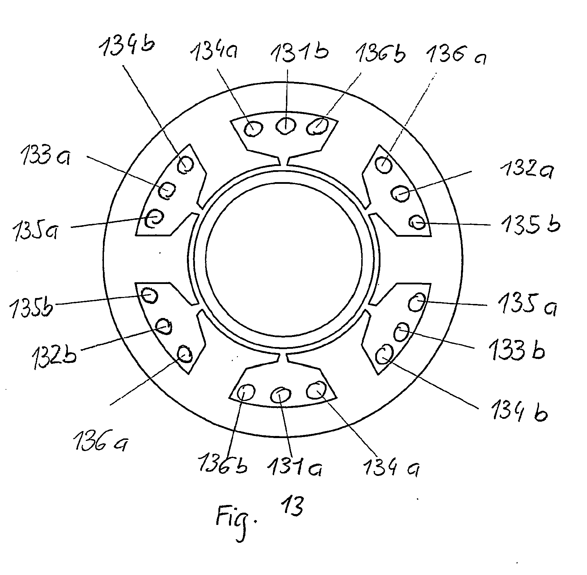

Während die bisher behandelten Wicklungsvarianten integrierte Varianten darstellen, die gleichzeitig Tragkräfte und Drehmomente aufbauen können, zeigt Fig. 13 eine Ausführung mit getrennten Wicklungssätzen für die entsprechenden Funktionen. Das dreiphasige, zweipolige Wicklungssystem 131a-131b, 132a-132b und 133a-133b dient bei einer zweipoligen Permanentmagneterregung der Erzeugung eines Drehmoments. Mit Hilfe des dreiphasigen Wicklungssystems 134a-134b, 135a-135b und 136a-136b kann eine vierpolige Flußdichteverteilung erzeugt werden, die zur Erzeugung von Tragkräften verwendet werden kann. Auch in dieser Variante sind die Erfindungsmerkmale zu erkennen.

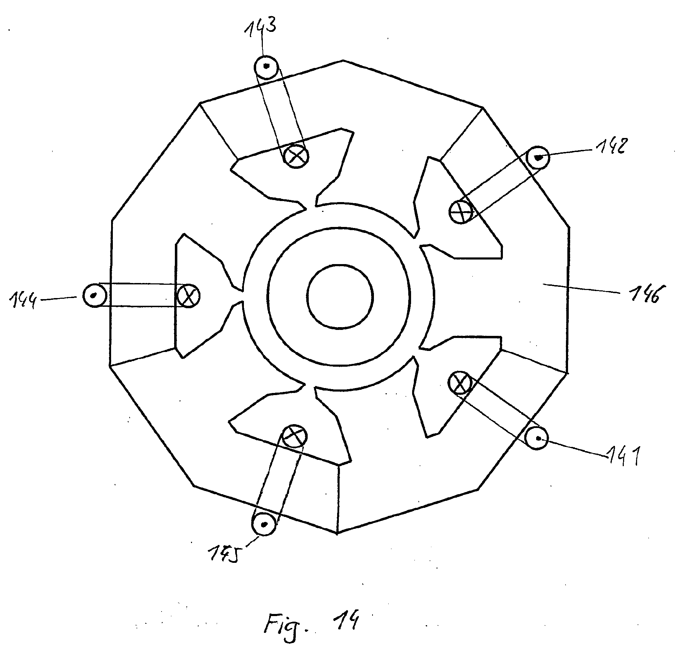

Ein sehr einfacher und kostenmäßig günstiger Aufbau läßt sich durch eine mechanische Anordnung erreichen, wie sie in Fig. 14 dargestellt ist. Hier umschließen die Spulen (141, 142, 143, 144 und 145) anstelle der Statorschenkel das Statorjoch (146). Wird das Statorjoch aus Segmenten zusammengesetzt, können einfache Formspulen eingesetzt werden. Die einzelnen Segmente können über einen Segmentträger, wie zum Beispiel ein der Statorkontur angepaßtes Kunststoffteil, über entsprechende Befestigungsmittel montiert und positioniert werden.

Die in Fig. 14 gezeigte Variante bietet den Vorteil, daß sich in der luftspaltnahen Umgebung der Statorzähne keine aus der Statorfläche herausragende Teile (Wicklungen) befinden. An den beiden Oberflächen des Stators können daher je nach Applikation Teile von Pumpen, Lüfter, Gebläsen, Ventilatoren oder anderes angebracht werden.

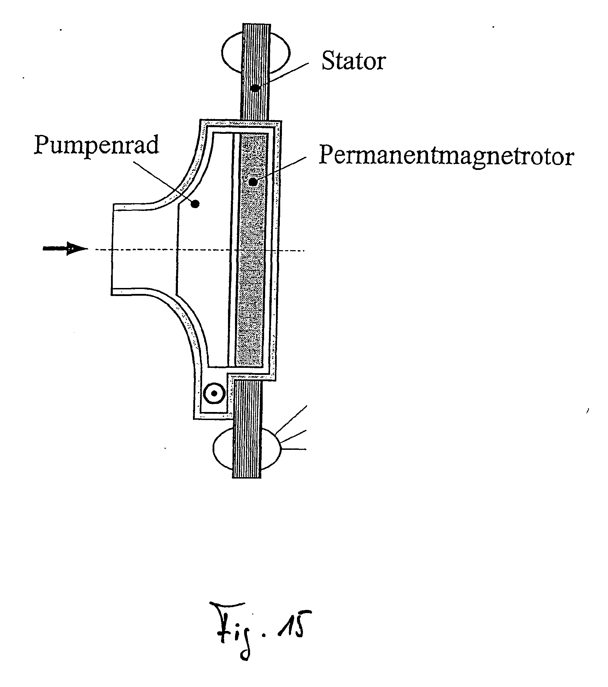

In Fig. 15 ist eine solche Anordnung gezeigt. Hier befindet sich ein Teil des Pumpengehäuses direkt auf der Oberfläche der Statorzähne.

## Patentansprüche

1. Magnetgelagerter elektrischer Antrieb, umfassend eine magnetisch gelagerte elektrische Maschine mit im Stator oder Rotor eingebrachten Wicklungen für die Drehmoment- und Tragkraftbildung, eine Sensorik zur Bestimmung der Rotorpositionen und eine analoge oder digitale Elektronik zur Steuerung, Regelung, Überwachung und Speisung der magnetgelagerten Maschine, wobei die elektrische Maschine über Wicklungen verfügt, die bei entsprechender Bestromung Durchflutungen bzw. magnetische Felder mit den Polzahlen p₁ und p₂ erzeugen können, wobei p₁ und p₂ der Bedingung p₁=p₂±2 genügen und p₁ oder p₂ die Polzahl des Rotors, insbesondere eines Permanentmagnetrotors, darstellen,
**dadurch gekennzeichnet, daß** die elektrische Maschine für den p₁- und p₂-poligen Feld- bzw. Durchflutungsaufbau im Stator mit einer Anzahl n von Statorschenkeln (bei konzentrierten Wicklungen), Statorzähnen (bei verteilten Wicklungen) oder Statornuten ausgestattet ist, wobei die Zahl n nicht zugleich ein ganzzahliges Vielfaches von der Polzahl p₁ und der Polzahl p₂ darstellt.

2. Elektrischer Antrieb nach Anspruch 1,
**dadurch gekennzeichnet, daß** die Statorsegmente zwischen zwei orthogonal zueinander stehenden Achsen durch den Statormittelpunkt sich in der Form unterscheiden.

3. Elektrischer Antrieb nach einem der vorangegangenen Ansprüche,
**dadurch gekennzeichnet, daß** der Statorblechschnitt zu höchstens einer von zwei orthogonal zueinander stehenden Achsen in der Statorebene achsensymmetrisch ist.

4. Elektrischer Antrieb nach einem der vorangegangenen Ansprüche,
**dadurch gekennzeichnet, daß** die Wicklungssegmente zwischen zwei orthogonal zueinander stehenden Achsen durch den Statormittelpunkt sich in der Form unterscheiden.

5. Elektrischer Antrieb nach einem der vorangegangenen Ansprüche,
**dadurch gekennzeichnet, daß** die Wicklungsanordnung zu höchstens einer von zwei orthogonal zueinander stehenden Achsen in der Statorebene achsensymmetrisch ist.

6. Elektrischer Antrieb nach einem der vorangegangenen Ansprüche,
**dadurch gekennzeichnet, daß** zumindest eines der beiden p₁- und p₂-poligen Durchflutungs- oder Wicklungsfeldverläufe über den Stator- bzw. Luftspaltumfang innerhalb einer Spanne von einer oder mehreren Polteilungen Unsymmetrien aufweist oder sich aus nichtperiodischen Abschnitten zusammensetzt.

7. Elektrischer Antrieb nach einem der vorangegangenen Ansprüche,
**dadurch gekennzeichnet, daß** die unsymmetrische Durchflutungsverteilung treppenförmig den Verlauf zweier überlagerter p₁- und p₂-poligen Durchflutungsfunktionen nachbildet, wobei zumindest einer dieser beiden Funktionen eine Winkelschrittweite der Treppenstufen aufweist, die kein ganzzahliges Vielfaches einer oder zweier Polteilungen beträgt.

8. Elektrischer Antrieb nach einem der vorangegangenen Ansprüche,
**dadurch gekennzeichnet, daß** die Statorwicklung vollstandig oder teil weise als verteilte Wicklung ausgeführt ist, mit Spulengruppen die sich aus zueinander versetzten und miteinander verschalteten Einzelspulen zusammensetzen.

9. Elektrischer Antrieb nach einem der vorangegangenen Ansprüche,
**dadurch gekennzeichnet, daß** die Statorwicklung vollständig oder teilweise als gesehnte Wicklung ausgeführt ist, das heißt mit Spulenweiten ungleich einer der im Motor vorhandenen Polweiten.

10. Elektrischer Antrieb nach einem der vorangegangenen Ansprüche,
**dadurch gekennzeichnet, daß** die Statorwicklung sich aus konzentrierten Spulen zusammensetzt, die jeweils einen Statorschenkel umschließen.

11. Elektrischer Antrieb nach einem der vorangegangenen Ansprüche,
**dadurch gekennzeichnet, daß** sich zwischen zwei mit konzentrierten Spulen umwickelten Statorschenkeln mindestens ein Schenkel oder Zahn befindet, der nicht bewickelt ist.

12. Elektrischer Antrieb nach einem der vorangegangenen Ansprüche,
**dadurch gekennzeichnet, daß** für die Tragkrafterzeugung zur magnetischen Lagerung und die Drehmomenterzeugung zum Motorbetrieb getrennte Wicklungssätze verwendet werden, wobei ein Wicklungssatz nur mit Strömen zur Tragkraftbildung und der andere Wicklungssatz nur mit Strömen zur Drehmomentbildung gespeist wird.

13. Elektrischer Antrieb nach einem der vorangegangenen Ansprüche,
**dadurch gekennzeichnet, daß** für die Tragkrafterzeugung zur magnetischen Lagerung und die Drehmomenterzeugung zum Motorbetrieb nur ein gemeinsamer Wicklungssatz verwendet wird, wobei die Spulen des Wicklungssatzes mit Strömen betrieben werden, die sowohl Komponenten zur Erzeugung von Tragkräften als auch Komponenten zur Erzeugung des Drehmomentes enthalten.

14. Elektrischer Antrieb nach einem der vorangegangenen Ansprüche,
**dadurch gekennzeichnet, daß** der Wicklungssatz so ausgeführt wird, daß durch eine entsprechende Bestromung der Wicklungsphasen mit überlagerten Stromkomponenten gleichzeitig ein Drehfeld für die Tragkrafterzeugung und ein Dreh- oder Wechselfeld für die Drehmomentbildung erzeugt werden kann.

15. Elektrischer Antrieb nach einem der vorangegangenen Ansprüche,
**dadurch gekennzeichnet, daß** der Wicklungssatz für die Tragkrafterzeugung als Drehfeldwicklung ausgeführt wird

16. Elektrischer Antrieb nach einem der vorangegangenen Ansprüche,
**dadurch gekennzeichnet, daß** der Wicklungssatz für die Drehmomentbildung als Drehfeldwicklung ausgeführt wird.

17. Elektrischer Antrieb nach einem der vorangegangenen Ansprüche,
**dadurch gekennzeichnet, daß** der Wicklungssatz für die Drehmomentbildung als Wechselfeldwicklung ausgeführt wird.

18. Elektrischer Antrieb nach einem der vorangegangenen Ansprüchen,
**dadurch gekennzeichnet, daß** die Spulen das Statorjoch so umschließen, daß die Spulenachsen im wesentlichen der Umfangsrichtung folgen oder normal zu Strahlen durch den Statormittelpunkt stehen um im luftspaltnahen Bereich der Statorschenkel oder Statorzähne Platz für mechanische oder elektrische Aufbauten, insbesondere für Pumpen-, Lüfter-, Gebläse- oder Ventilatorteile, zu gewinnen.

19. Elektrischer Antrieb nach den vorangegangenen Ansprüchen,
**dadurch gekennzeichnet, daß** das Statorjoch mechanisch in einzelne getrennte Abschnitte unterteilt ist um eine einfache Montage der Spulen zu ermöglichen.

20. Elektrischer Antrieb nach den vorangegangenen Ansprüchen,
**dadurch gekennzeichnet, daß** die Teile des Statojorhes an einem Montageträger befestigt sind und zwar in einer Weise, daß möglichst kleine Luftspalfe zwischen den Statorjochteilen entstehen.

21. Elektrischer Antrieb nach einem der vorangegangenen Ansprüche,
**dadurch gekennzeichnet, daß** der Motor über einen zwei- oder vierpoligen Permanentmagnetrotor und über drei, fünf, sechs oder sieben konzentrierten Statorspulen verfügt, wobei die Spulen mit Strömen gespeist werden, die sowohl Komponenten zur Tragkrafterzeugung als auch zur Drehmomenterzeugung enthalten.

22. Elektrischer Antrieb nach einem der vorangegarigenen Ansprüche, **dadurch gekennzeichnet, daß** der Motor über mehrere Stränge verfügt, die entweder aus Einzelspulen oder aus elektrisch zusammengeschalteten Spulen, insbesondere Durchmesserspulen, gesehnte Spulen oder verteilte Spulen, bestehen.

23. Elektrischer Antrieb nach einem der vorangegangenen Ansprüche, **dadurch gekennzeichnet, daß** die Stränge des Motors sternförmig verschaltet sind.

24. Elektrischer Antrieb nach einem der vorangegangenen Ansprüche, **dadurch gekennzeichnet, daß** bei einer sternförmigen Verschaltung der Motorstränge der Sternpunkt elektrisch nicht angeschlossen ist.

25. Elektrischer Antrieb nach einem der vorangegangenen Ansprüche, **dadurch gekennzeichnet, daß** die Stränge des Motors ringförmig verschaltet sind.

26. Elektrischer Antrieb nach einem der vorangegangenen Ansprüche, **dadurch gekennzeichnet, daß** die verschalteten Stranganschlüsse über Leistungshalbbrücken angesteuert werden.

27. Elektrischer Antrieb nach einem der vorangegangenen Ansprüche, **dadurch gekennzeichnet, daß** die verschalteten Stranganschlüsse über Leistungsvollbrücken angesteuert werden.

28. Elektrischer Antrieb nach einem der vorangegangenen Ansprüche, **dadurch gekennzeichnet, daß** die Strombeläge der am Statorumfang verteilten Motorstränge eine Statordurchflutung von der Art ergeben, daß sie über den Umfang gesehen, eine p₁- und p₂-polige Grundwelle beinhaltet.

29. Elektrischer Antrieb nach einem der vorangegangenen Ansprüche, **dadurch gekennzeichnet, daß** der Antrieb einen p₁- oder p₂-poligen Rotor mit Permanentmagneten aufweist.

## Claims

1. Magnetically journalled electrical drive including a magnetically journalled electrical machine with windings inserted in the stator or rotor for the formation of torque and levitation force, a sensor system for determining the rotor positions and an analogue or digital electronic system for the control, regulation, monitoring and feeding of the magnetically journalled machine, with the electrical machine having windings which with appropriate current flow can produce magnetomotive forces (MMFs) or magnetic fields with the pole numbers p₁ and p₂ with p₁ and p₂ satisfying the condition p₁=p₂±2 and p₁ or p₂ representing the pole number of the rotor, in particular of a permanent magnet rotor,
**characterized in that**
the electrical machine is equipped for the p₁ and p₂ pole field production or MMF production in the stator with a number n of stator limbs (with concentrated windings), stator teeth (with distributed windings) or stator slots, with the number n not simultaneously representing a whole-numbered multiple of the pole number p₁ and the pole number p₂.

2. Electrical drive in accordance with claim 1,
**characterized in that** the stator segments between two axes through the stator middle point are distinguished in shape whereby the two axes stand orthogonal to one another.

3. Electrical drive in accordance with one of the preceding claims,
**characterized in that** the stator core is axially symmetrical to at most one of two axes in the stator plane which stand orthogonal to one another.

4. Electrical drive in accordance with one of the preceding claims,
**characterized in that** the winding segments between two axes through the stator middle point are distinguished in shape whereby the two axes stand orthogonal to one another.

5. Electrical drive in accordance with one of the preceding claims,
**characterized in that** the winding arrangement is axially symmetrical to at most one of two axes in the stator plane standing orthogonal to one another.

6. Electrical drive in accordance with one of the preceding claims,
**characterized in that** at least one of the two p₁ and p₂ pole MMF or winding field distributions has asymmetries over the stator or air gap periphery within an interval of one or more pole pitches, or is composed of non-periodic sections.

7. Electrical drive in accordance with one of the preceding claims,
**characterized in that** the asymmetrical MMF distribution is in step-like form in accordance with the course of two superimposed p₁ and p₂ pole MMF functions, with at least one of these two functions having an angular step width of the stair steps which does not amount to any whole-numbered multiple of one or two pole pitches.

8. Electrical drive in accordance with one of the preceding claims,
**characterized in that** the stator winding is fully or partly designed as a distributed winding with coil groups which are composed of mutually displaced individual coils connected to one another.

9. Electrical drive in accordance with one of the preceding claims,
**characterized in that** the stator winding is fully or partly designed as a chorded winding that is to say with coil widths dissimilar to one of the pole widths present in the motor.

10. Electrical drive in accordance with one of the preceding claims,
**characterized in that** the stator winding is assembled from concentrated coils which each surround one stator limb.

11. Electrical drive in accordance with one of the preceding claims,
**characterized in that** at least one limb or tooth which is not wound is located between two stator limbs wound with concentrated coils.

12. Electrical drive in accordance with one of the preceding claims,
**characterized in that** separate winding sets are used for the levitation force generation for the magnetic journaling and for the torque generation for the motor drive, with one winding set only being fed with currents for levitation force formation and the other winding set only being fed with currents for torque formation.

13. Electrical drive in accordance with one of the preceding claims,
**characterized in that** only one common winding set is used for the levitation force generation for the magnetic journaling and for the torque generation for the motor operation, with the coils of the winding set being operated with currents which contain both components for the generation of supporting forces and also components for the generation of the torque.

14. Electrical drive in accordance with one of the preceding claims,
**characterized in that** the winding set is so designed that with an appropriate current flow through the winding phases with superimposed current components, a rotary field for the levitation force generation and a rotary field or alternating field for the torque formation can be produced simultaneously.

15. Electrical drive in accordance with one of the preceding claims,
**characterized in that** the winding set for the levitation force generation is designed as a rotary field winding.

16. Electrical drive in accordance with one of the preceding claims,
**characterized in that** the winding set for the torque formation is designed as a rotary field winding.

17. Electrical drive in accordance with one of the preceding claims,
**characterized in that** the winding set for the torque formation is designed as an alternating field winding.

18. Electrical drive in accordance with one of the preceding claims,
**characterized in that** the coils enclose the stator yoke in a way that the coil axes essentially follow the circumferential direction or stand normal to rays through the centre point of the stator in order to obtain space for mechanical or electrical assemblies, in particular for pump, compressor, fan or ventilator parts, in the region of the stator limbs and stator teeth close to the air gap.

19. Electrical drive in accordance with one of the preceding claims,
**characterized in that** the stator yoke is mechanically subdivided into individual separate sections in order to enable a simple assembly of the coils.

20. Electrical drive in accordance with one of the preceding claims,
**characterized in that** the parts of the stator yoke are secured to an mounting carrier and indeed in such a way that as far as possible no considerable air gaps arise between the stator yoke parts.

21. Electrical drive in accordance with one of the preceding claims,
**characterized in that** the motor has a two or four pole permanent magnet rotor and three, five, six or seven concentrated stator coils, with the coils being fed with currents which contain both components for the generation of levitation forces and also for the generation of torque.

22. Electrical drive in accordance with one of the preceding claims,
**characterized in that** the motor has a plurality of phases which either consist of individual coils or of coils electrically connected together in particular full-pitch coils, chorded coils or distributed coils.

23. Electrical drive in accordance with one of the preceding claims,
**characterized in that** the phases of the motor are star connected.

24. Electrical drive in accordance with one of the preceding claims,
**characterized in that** with the motor phases star connected, the star-point is not electrically connected.

25. Electrical drive in accordance with one of the preceding claims,
**characterized in that** the phases of the motor are connected in ring-like manner.

26. Electrical drive in accordance with one of the preceding claims,
**characterized in that** the connected phase connections are driven via power half bridges.

27. Electrical drive in accordance with one of the preceding claims,
**characterized in that** the connected phase connections are driven via power full bridges.

28. Electrical drive in accordance with one of the preceding claims,
**characterized in that** the current distributions of the motor phases distributed at the stator periphery result in a stator MMF of the kind which, viewed over the periphery, contains a p₁ pole fundamental wave and a p₂ pole fundamental wave.

29. Electrical drive in accordance with one of the preceding claims,
**characterized in that** the drive has a p₁ or p₂ pole rotor with permanent magnets.

## Revendications

1. Entraînement électrique à paliers magnétiques, comprenant une machine électrique à paliers magnétiques, pourvue d'enroulements mis en place dans le stator ou le rotor pour la formation de couple et de force portante, un équipement de détection pour déterminer les positions du rotor et un équipement électronique analogique ou numérique pour commander, réguler, surveiller et alimenter la machine à paliers magnétiques, sachant que la machine électrique dispose d'enroulements qui, avec une activation correspondante, peuvent produire des flux magnétiques ou des champs magnétiques ayant les nombres de pôles p₁ et p₂, sachant que p₁ et p₂ satisfont à la condition p₁ = p₂ ± 2 et que p₁ ou p₂ représente le nombre de pôles du rotor, notamment d'un rotor à aimants permanents,
**caractérisé en ce que** la machine électrique est dotée, pour l'établissement de champ ou de flux magnétique à p₁ et p₂ pôles dans le stator, d'un nombre n de branches de stator (pour des enroulements concentrés), de dents de stator (pour des enroulements répartis) ou de rainures de stator, sachant que le nombre n ne constitue pas en même temps un multiple entier du nombre de pôles p₁ et du nombre de pôles p₂.

2. Entraînement électrique selon la revendication 1, **caractérisé en ce que** les segments de stator sont de formes différentes entre deux axes mutuellement orthogonaux passant par le centre du stator.

3. Entraînement électrique selon l'une des revendications précédentes, **caractérisé en ce que** la découpe de tôle de stator est axialement symétrique à au plus l'un de deux axes mutuellement orthogonaux dans le plan du stator.

4. Entraînement électrique selon l'une des revendications précédentes, **caractérisé en ce que** les segments d'enroulement sont de formes différentes entre deux axes mutuellement orthogonaux passant par le centre du stator.

5. Entraînement électrique selon l'une des revendications précédentes, **caractérisé en ce que** l'agencement d'enroulement est axialement symétrique à au plus l'un de deux axes mutuellement orthogonaux dans le plan du stator.

6. Entraînement électrique selon l'une des revendications précédentes, **caractérisé en ce qu'**au moins une des deux allures de champ d'enroulement ou de flux magnétique à p₁ et p₂ pôles présente, sur la périphérie du stator ou de l'entrefer, des asymétries à l'intérieur d'une étendue d'un ou plusieurs pas polaires, ou se compose de parties non périodiques.

7. Entraînement électrique selon l'une des revendications précédentes, **caractérisé en ce que** la répartition de flux magnétique asymétrique reproduit en escalier l'allure de deux fonctions de flux magnétique à p₁ et p₂ pôles superposées, sachant qu'au moins une de ces deux fonctions présente une portée de pas angulaire des marches d'escalier qui n'est pas égal à un multiple entier d'un ou deux pas polaires.

8. Entraînement électrique selon l'une des revendications précédentes, **caractérisé en ce que** l'enroulement de stator est réalisé en totalité ou en partie sous forme d'enroulement réparti, avec des groupes de bobines qui se composent de bobines individuelles mutuellement décalées et interconnectées.

9. Entraînement électrique selon l'une des revendications précédentes, **caractérisé en ce que** l'enroulement de stator est réalisé en totalité ou en partie sous forme d'enroulement à pas partiel, c'est-à-dire avec des portées de bobines différentes d'une des portées polaires présentes dans le moteur.

10. Entraînement électrique selon l'une des revendications précédentes, **caractérisé en ce que** l'enroulement de stator se compose de bobines concentrées qui entourent chacune une branche de stator.

11. Entraînement électrique selon l'une des revendications précédentes, **caractérisé en ce qu'**au moins une branche ou dent qui n'est pas bobinée se trouve entre deux branches de stator autour desquelles sont enroulées des bobines concentrées.

12. Entraînement électrique selon l'une des revendications précédentes, **caractérisé en ce qu'**on utilise des ensembles d'enroulements séparés pour la production de force portante pour le montage sur paliers magnétiques et pour la production de couple pour le fonctionnement du moteur, sachant qu'un ensemble d'enroulement est alimenté uniquement en courants destinés à la formation de force portante et l'autre ensemble d'enroulement uniquement en courants destinés à la formation de couple.

13. Entraînement électrique selon l'une des revendications précédentes, **caractérisé en ce qu'**on utilise un seul ensemble d'enroulement commun pour la production de force portante pour le montage sur paliers magnétiques et pour la production de couple pour le fonctionnement du moteur, sachant que les bobines de l'ensemble d'enroulement sont exploitées avec des courants qui contiennent à la fois des composantes pour la production de forces portantes et des composantes pour la production du couple.

14. Entraînement électrique selon l'une des revendications précédentes, **caractérisé en ce que** l'ensemble d'enroulement est réalisé de telle sorte que, par une activation correspondante des phases d'enroulement avec des composantes de courant superposées, on peut produire simultanément un champ rotatif pour la production de force portante et un champ rotatif ou alternatif pour la formation de couple.

15. Entraînement électrique selon l'une des revendications précédentes, **caractérisé en ce que** l'ensemble d'enroulement pour la production de force portante est réalisé sous forme d'enroulement à champ rotatif.

16. Entraînement électrique selon l'une des revendications précédentes, **caractérisé en ce que** l'ensemble d'enroulement pour la formation de couple est réalisé sous forme d'enroulement à champ rotatif.

17. Entraînement électrique selon l'une des revendications précédentes, **caractérisé en ce que** l'ensemble d'enroulement pour la formation de couple est réalisé sous forme d'enroulement à champ alternatif.

18. Entraînement électrique selon l'une des revendications précédentes, **caractérisé en ce que** les bobines entourent la culasse de stator de telle sorte que les axes des bobines suivent essentiellement la direction périphérique ou sont normaux à des rayons passant par le centre du stator, afin de gagner, dans la région des branches ou dents de stator qui est proche de l'entrefer, de la place pour des composants mécaniques ou électriques, notamment pour des éléments de pompe, d'aérateur, de soufflante ou de ventilateur.

19. Entraînement électrique selon l'une des revendications précédentes, **caractérisé en ce que** la culasse de stator est mécaniquement divisée en parties individuelles séparées, afin de permettre un montage simple des bobines.

20. Entraînement électrique selon l'une des revendications précédentes, **caractérisé en ce que** les parties de la culasse de stator sont fixées sur un support de montage, et ce de telle sorte que des entrefers les plus petits possibles sont créés entre les parties de culasse de stator.

21. Entraînement électrique selon l'une des revendications précédentes, **caractérisé en ce que** le moteur dispose d'un rotor à aimants permanents à deux ou quatre pôles et de trois, cinq, six ou sept bobines de stator concentrées, sachant que les bobines sont alimentées avec des courants qui contiennent des composantes tant pour la production de force portante que pour la production de couple.

22. Entraînement électrique selon l'une des revendications précédentes, **caractérisé en ce que** le moteur dispose de plusieurs phases qui sont constituées soit de bobines individuelles soit de bobines électriquement reliées entre elles, notamment des bobines à pas diamétral, des bobines à pas partiel ou des bobines réparties.

23. Entraînement électrique selon l'une des revendications précédentes, **caractérisé en ce que** les phases du moteur sont connectées en étoile.

24. Entraînement électrique selon l'une des revendications précédentes, **caractérisé en ce qu'**en cas de connexion en étoile des phases du moteur, le point neutre n'est pas électriquement raccordé.

25. Entraînement électrique selon l'une des revendications précédentes, **caractérisé en ce que** les phases du moteur sont connectées en anneau.

26. Entraînement électrique selon l'une des revendications précédentes, **caractérisé en ce que** les branchements de phase connectés sont asservis par l'intermédiaire de demi-ponts de puissance.

27. Entraînement électrique selon l'une des revendications précédentes, **caractérisé en ce que** les branchements de phase connectés sont asservis par l'intermédiaire de ponts intégraux de puissance.

28. Entraînement électrique selon l'une des revendications précédentes, **caractérisé en ce que** les densités linéiques de courant des phases de moteur réparties sur la périphérie du stator produisent un flux magnétique de stator d'un type tel qu'il contient, considéré sur la périphérie, une onde fondamentale à p₁ et p₂ pôles.

29. Entraînement électrique selon l'une des revendications précédentes, **caractérisé en ce que** l'entraînement présente un rotor à aimants permanents à p₁ ou p₂ pôles.
